# EUROPÄISCHE PATENTSCHRIFT

(11) **EP 3 575 228 B1**
(45) Veröffentlichungstag und Bekanntmachung des Hinweises auf die Patenterteilung: **28.04.2021**
(21) Anmeldenummer: 18175652.9
(22) Anmeldetag: 02.06.2018
(51) Int. Cl.: B65B 35/40, B65G 47/52, B65B 35/38, B65B 35/44, B65G 47/91, B65B 65/02, B65B 43/10

(54) **ÜBERGABEVORRICHTUNG FÜR EINE VERPACKUNGSMASCHINE**
TRANSFER DEVICE FOR A PACKAGING MACHINE
DISPOSITIF DE TRANSFERT POUR UNE MACHINE D'EMBALLAGE

(43) Veröffentlichungstag der Anmeldung: 04.12.2019
(73) Patentinhaber: Dividella AG, 9472 Grabs (CH)
(72) Erfinder: TRABER, Roman, 9451 Kriessern (CH); MARUGG, Peter, 9468 Sax (CH); SPECKER, Markus, 9450 Altstätten (CH)
(74) Vertreter: Hepp Wenger Ryffel AG

(56) Entgegenhaltungen:
- EP-A2- 1 318 074
- WO-A2-2004/074145
- DE-U1-202011 051 603

## Beschreibung

Die Erfindung betrifft das technische Gebiet der automatisierten Verpackung von Artikeln, insbesondere Medizinalprodukten.

Bei der Verpackung von Artikeln werden die Verpackungen und die Artikel zunächst getrennt der Verpackungsanlage zugeführt. Typischerweise geschieht dies auf Fördermitteln, die beispielsweise als Förderbänder ausgestaltet sind. Die Förderung von Artikeln und Verpackungen erfolgt hierbei besonders bevorzugt kontinuierlich, in einer sogenannten endlosen Reihe. Derartige Förderbänder werden häufig zumindest bereichsweise parallel geführt, sodass in diesem Bereich die Übergabe von auf einem Förderband befindlichen Artikeln auf/in Verpackungen, die sich auf dem anderen Förderband befinden, mithilfe von Übergabevorrichtungen ermöglicht ist.

Es versteht sich, dass der Vorgang des Verpackens im Rahmen der allgemeinen Betriebsabläufe in der Verpackungsindustrie möglichst schnell erfolgen sollte. Das erfordert einerseits eine umfangreiche Koordination der von einer Übergabevorrichtung auszuführenden Bewegungen, da die Förderbänder für die Artikel und die Verpackungen typischerweise mit unterschiedlicher Geschwindigkeit betrieben werden. Das ist deshalb sinnvoll, weil typischerweise mehrere Artikel in ein und dieselbe Verpackung abgelegt werden. Die Förderung der Artikel kann daher im Idealfall um einen Faktor schneller erfolgen, welcher der Anzahl der in ein und derselben Verpackung abzulegenden Artikel entspricht. Zum anderen sollte die Übergabestrecke eine möglichst geringe Länge aufweisen, damit die Verpackungsanlage möglichst wenig Platz einnimmt. Unter diesen Randbedingungen ist es sinnvoll, dass die Übergabevorrichtung nicht stationär angeordnet ist, sondern sich während des Übergabevorgangs entlang der Förderstrecken in dem Übergabebereich mit- und wieder zurückbewegt, und zwar einerseits möglichst schnell, andererseits aber auch möglichst präzise.

Zur Optimierung von Übergabevorrichtungen in Verpackungsanlagen sind bereits verschiedene Ansätze im Stand der Technik vorgeschlagen worden.

Das Dokument EP 1 164 099 B1 beschreibt eine in nicht näher beschriebener Art und Weise angetriebene Robotereinrichtung, welche eine Greifeinrichtung an einem doppelten Vierfach-Gestänge aufweist. Durch die Ausgestaltung des Vierfach-Gestänges kann die Ausrichtung der Greifeinrichtung beim Übersetzen der Artikel von einem auf das andere Förderband in einer Ebene senkrecht zur Grundfläche der Vorrichtung im Wesentlichen konstant gehalten werden. Die Übergabevorrichtung ist auf einer Führungsschiene verschiebbar neben den Förderbändern angeordnet. Eine derartige Anordnung ist mit erhöhten, aber noch nicht mit sehr hohen Geschwindigkeiten betreibbar, und zwar einerseits aufgrund des mechanisch diffizilen Vierfach-Gestänges und andererseits aufgrund der grossen bewegten Massen bei der Verschiebung der Roboteranordnung auf der Führungsschiene.

Aus dem Dokument DE 10 2009 022 820 B4 ist eine Übergabevorrichtung bekannt, welche explizit eine Verbesserung der Vorrichtung aus EP 1 164 099 B1 hinsichtlich der möglichen Arbeitsgeschwindigkeit des Gelenksarmroboters anstrebt. Zur Erhöhung der möglichen Arbeitsgeschwindigkeit wird hier vorgeschlagen, statt einer einzigen Übergabevorrichtung zwei Übergabevorrichtungen vorzusehen, denen jeweils ein eigener Zuführförderer zugeordnet ist. Die beiden Übergabevorrichtungen sind hierbei entlang der Förderrichtung seriell angeordnet, was die Baulänge der Verpackungsanlage entlang der Förderstrecke erhöht. Zudem ist auch der Platzbedarf in der Breite erhöht, da ein weiterer Zuführförderer benötigt wird. Die Ermöglichung einer höheren Arbeitsgeschwindigkeit wird somit im Wesentlichen durch die Duplizierung von Übergabemitteln erreicht, was insbesondere aus den genannten Gründen nachteilig ist.

Das Dokument EP 1 318 074 A2 zeigt eine karussellartige Übergabeanordnung nach Oberbegriff des Anspruchs 1 für das Umsetzen von Flaschen in Kartons.

Dokument WO 2004/074145 A2 zeigt eine Übergabevorrichtung, mit welcher Kartons von einer horizontalen in eine vertikale Lage überführt und umgesetzt werden können.

Es ist somit eine Aufgabe der vorliegenden Erfindung, die vorbeschriebenen Nachteile des Stands der Technik zu überwinden. Insbesondere ist es eine Aufgabe der Erfindung, eine Übergabevorrichtung vorzuschlagen, welche bei möglichst geringem Raumbedarf eine möglichst hohe Arbeitsgeschwindigkeit bei grosser Präzision ermöglicht.

Diese Aufgabe wird gelöst mit einer Übergabevorrichtung und einer Verpackungsmaschine mit einer solchen Übergabevorrichtung, gemäss den unabhängigen Patentansprüchen.

Eine erfindungsgemässe Übergabevorrichtung ist für eine Verpackungsmaschine verwendbar, welche einen ersten Bereitstellungbereich für zu verpackende Artikel und einen zweiten Bereitstellungbereich für Verpackungsmaterial aufweist. Der erste Bereitstellungsbereich kann hierbei als Förderstrecke zur Zuführung von zu verpackenden Artikeln ausgebildet sein, und der zweite Bereitstellungsbereich kann als eine Förderstrecke zur Zuführung von Verpackungsmaterial ausgebildet sein. Im Falle von Förderstrecken verlaufen die erste Förderstrecke und die zweite Förderstrecke in einem Übergabeabschnitt typischerweise parallel, wie im Rahmen der Ausführungsbeispiele noch näher erläutert wird.

Als zu verpackende Artikel sind im Rahmen der Erfindung insbesondere Medizinalprodukte zu nennen, wie beispielsweise Spritzen, Vials, Blister, etc.; es kommen aber auch Verpackungselemente als Artikel in diesem Sinne infrage, wie sie häufig in Verpackungen eingesetzt werden, bspw. Trays.

Die Übergabevorrichtung weist eine Übergabeeinheit auf, welche in dem Übergabeabschnitt insbesondere geführt verfahrbar angeordnet ist.

Die Übergabeeinheit ist derart ausgebildet, dass ein Transfer von Artikeln von dem ersten Bereitstellungsbereich auf/in in dem zweiten Bereitstellungsbereich bereitgestelltes Verpackungsmaterial (oder auch auf eine Freifläche im zweiten Übergabebereich) ermöglicht ist. Eine Variante ist hierbei ein Transfer von der ersten Förderstrecke auf/in auf der zweiten Förderstrecke bereitgestelltes Verpackungsmaterial (oder auf einen freien Bereich der zweiten Förderstrecke); es sind aber ganz grundsätzlich auch Transfers wie folgt möglich: Ruhend bereitgestellte Artikel auf/in sich bewegendes Verpackungsmaterial (bzw. eine Freifläche auf einer Förderstrecke); bewegend bereitgestellte Artikel auf/in ruhend bereitgestelltes Verpackungsmaterial (bzw. eine ruhende Freifläche); ruhend bereitgestellte Artikel auf/in ruhend bereitgestelltes Verpackungsmaterial (bzw. eine ruhende Freifläche).

Eine erste Antriebseinheit ist hierbei für das Verfahren der Übergabeeinheit vorgesehen, insbesondere parallel zur ersten Förderstrecke und/oder zur zweiten Förderstrecke; diese Bewegungsrichtung ist nachfolgend im Rahmen der Ausführungsbeispiele als Bewegung parallel zur bzw. entlang der x-Achse bezeichnet. Ferner ist mindestens eine zweite Antriebseinheit für Bewegungen der Übergabeeinrichtung beim Transfer von Artikeln von dem ersten Bereitstellungsbereich auf/in in dem zweiten Bereitstellungsbereich bereitgestelltes Verpackungsmaterial (bzw. eine ruhende oder sich bewegende Freifläche im zweiten Bereitstellungsbereich) vorgesehen; diese Bewegungen im Raum können bevorzugt auch gleichzeitig mit der Bewegung parallel zur x-Achse stattfinden.

In bevorzugten Ausführungsformen ist zusätzlich zu der zweiten Antriebseinheit noch mindestens eine dritte Antriebseinheit für Bewegungen der Übergabeeinrichtung beim Transfer von Artikeln von dem ersten Bereitstellungsbereich auf/in in dem zweiten Bereitstellungsbereich bereitgestelltes Verpackungsmaterial vorgesehen.

Im Rahmen der Erfindung finden als Antriebseinheiten insbesondere Elektromotoren Verwendung. Die Auswahl geeigneter Antriebseinheiten, insbesondere Elektromotoren, kann mit fachüblichen Routinemassnahmen leicht vorgenommen werden.

Erfindungsgemäss sind die erste Antriebseinheit und die zweite Antriebseinheit sowie gegebenenfalls die dritte Antriebseinheit nicht gemeinsam mit der Übergabeeinheit verfahrbar. Sie sind also im Wesentlichen ortsfest montiert. Die erste Antriebseinheit kann um eine Achse parallel zur x-Achse verschwenkbar angeordnet sein; eine Bewegung parallel zur x-Achse ist jedoch auch bei der ersten Antriebseinheit vorzugsweise nicht vorgesehen.

Erfindungsgemäss umfasst die Übergabeeinheit ein Basiselement und einen Ausleger, wobei der Ausleger an dem Basiselement angelenkt ist, besonders bevorzugt mittels eines Drehgelenks.

Erfindungsgemäss umfasst die Übergabeeinheit eine Steuerstrebe, welche an dem Ausleger an der von der ersten Förderstrecke und/oder der zweiten Förderstrecke abgewandten Seite angelenkt ist. Bevorzugt ist wiederum ein Drehgelenk.

Im Rahmen der Erfindung ist das Basiselement auf einem Hauptträger geführt, welcher sich in seiner Hauptausdehnungsrichtung entlang dem ersten Bereitstellungsbereich und/oder dem zweiten Bereitstellungbereich erstreckt, insbesondere parallel zur ersten Förderstrecke (F₁) und/oder zur zweiten Förderstrecke (F₂).

Vorteilhafterweise ist die erste Antriebseinheit an dem Hauptträger angeordnet. Die erste Antriebseinheit kann dann vorteilhafterweise über einen Riemen, insbesondere einen Zahnriemen, oder eine Kette mit dem Basiselement wirkverbunden sein, um die Übergabeeinheit parallel zur x-Achse zu verfahren.

Weiter vorzugsweise ist die zweite Antriebseinheit derart mit dem Hauptträger wirkverbunden, dass der Hauptträger um eine zu seiner Hauptausdehnungsrichtung im Wesentlichen parallele Achse drehbar ist. Wenn das Basiselement der Übergabeeinheit auf dem Hauptträger geführt ist, kann über die Drehung des Hauptträgers mittels der zweiten Antriebseinheit in vorteilhafte Art und Weise die gesamte Übergabeeinheit um die x-Achse bzw. eine Achse parallel zur x-Achse verschwenkt werden. Das erlaubt mit verhältnismässig einfachen sowie mechanisch und konstruktiv unanfälligen Mitteln grosse und präzise Bewegungsumfänge.

Erfindungsgemäss ist die Steuerstrebe auf einem Steuerträger geführt. Der Steuerträger erstreckt sich in seiner Hauptausdehnungsrichtung im Wesentlichen parallel zur Hauptausdehnungsrichtung des Hauptträgers. Um Bewegungsunterschiede zwischen dem Steuerträger und dem Ausleger auszugleichen oder zu erzielen, ist die Steuerstrebe auf dem Steuerträger vorzugsweise gelenkig geführt. Besonders bevorzugt ist wiederum ein Drehgelenk.

In bevorzugten Ausführungsformen ist der Steuerträger mittels einer dritten Antriebseinheit um eine zu seiner Hauptausdehnungsrichtung im Wesentlichen parallelen Achse drehbar. Besonders vorteilhaft ist der Steuerträger als im Wesentlichen zylindrischer Körper ausgebildet.

Die Steuerstrebe ist vorteilhaft an der Aussenfläche des Steuerträgers gelenkig geführt. Durch die Führung der Steuerstrebe auf dem Steuerträger kann die mit dem Ausleger der Übergabeeinrichtung verbundene Steuerstrebe die Bewegung des Basiselements und des Auslegers entlang bzw. parallel zur x-Achse mitvollziehen. Die Führung kann mit fachüblichen Routinemassnahmen ausgelegt werden, beispielsweise mittels Profilkörpern.

In an sich bekannter Art und Weise kann die Übergabeeinheit eine Effektoreinheit mit mindestens einem, vorzugsweise einer Mehrzahl von Effektoren zum temporären Halten der zu verpackenden bzw. zu übersetzenden Artikel aufweisen. Besonders bevorzugt sind die Effektoren in der Effektoreinheit in Gruppen angeordnet wobei mit einer Gruppe von Effektoren vorzugsweise ein Artikel aufnehmbar ist. Besonders bevorzugt sind Saugnäpfe, welche zu verpackende bzw. zu übersetzende Artikel mittels Unterdruck temporär zu halten vermögen.

In bevorzugten Ausführungsformen weist die Übergabeeinheit einen Ausgleichsmechanismus auf, welcher derart ausgebildet ist, dass sich die Ausrichtung der Effektoreinheit bei bestimmungsgemässem Gebrauch relativ zu einer Ebene senkrecht zur Standfläche der Übergabevorrichtung und im Wesentlichen parallel zur Hauptausdehnungsrichtung des Hauptträgers nicht ändert. Dieser Effekt wurde im einleitend beschriebenen Stand der Technik durch ein doppeltes Vierfach-Gestänge erzielt. Im Rahmen der Erfindung ist es hingegen besonders bevorzugt, diesen Effekt über einen Riemen- oder Kettenübertrieb in der Übergabeeinheit zu bewirken. Hierfür kann eine Stellstange vorgesehen sein, welche parallel zur x-Achse und insbesondere an dem Hauptträger und vorzugsweise oberhalb der Führung des Basiselements der Übergabeeinheit angeordnet ist. Diese Stellstange ist drehbar gelagert und kann bspw. über einen geeignet ausgelegten Drehgelenkmechanismus in eine Drehung entlang ihrer Längsachse versetzt werden, welche der Drehung des Hauptträgers entgegen gerichtet ist. Alternativ zu dem Drehgelenkmechanismus ist es ebenfalls möglich, die Stellstange mit einer weiteren Antriebseinheit zu versehen, sodass sie direkt in eine Drehbewegung versetzt werden kann. Das erfordert zwar eine weitere Antriebseinheit, ermöglicht aber eine grössere Flexibilität bei der Ausrichtung der Effektoreinheit ohne die Notwendigkeit mechanischer Umbauten.

Die Stellstange ist weiter vorteilhaft durch das Basiselement der Übergabeeinheit hindurchreichend ausgebildet. Mittels eines Riemen- oder Kettenübertriebs kann das Drehmoment der Stellstange weiter übertragen werden, beispielsweise auf die Achse, mittels welcher der Ausleger an dem Basiselement befestigt ist. An der letztgenannten Achse kann ein weiterer Riemen- oder Kettenübertrieb vorgesehen sein, welcher mit einer im vorderen Bereich des Auslegers befindlichen Achse wirkverbunden ist, an der die Effektoreinheit angeordnet ist. Mittels solcher Riemen- oder Kettenübertriebe kann ein mit hoher Geschwindigkeit betreibbarer Ausgleichsmechanismus in besonders einfacher, mechanisch unanfälliger und präziser Art und Weise realisiert werden.

Es ist im Rahmen der Erfindung ergänzend möglich, noch eine zweite Stellstange vorzusehen, welche in analoger Art und Weise ausgebildet ist und mittels eines Drehgelenkmechanismus oder einer Antriebseinheit in eine Drehbewegung versetzt werden kann. Mittels von einer solchen zweiten Stellstange ausgehenden Riemen- oder Kettenübertrieben können bspw. Bewegungen von Effektoren oder Effektorengruppen vollzogen werden, um die Orientierung von in dem ersten Bereitstellungsbereich aufgenommenen Artikeln während des Transfers und vor dem Ablegen im zweiten Bereitstellungsbereich zu ändern.

Ein weiterer Aspekt der vorliegenden Erfindung betrifft eine Verpackungsmaschine mit einer Übergabevorrichtung wie vorstehend beschrieben.

Die vorstehend beschriebene Übergabevorrichtung eignet sich insbesondere für die Verwendung zum Verpacken von Artikeln, insbesondere Medizinalprodukten oder Verpackungselementen, wie vorstehend beschrieben und in den Ausführungsbeispielen noch konzeptionell weiter erläutert.

Ein weiterer Aspekt der Erfindung betrifft ein Verfahren zum Verpacken von Artikeln, insbesondere Medizinalprodukten oder Verpackungselementen, mittels einer Übergabevorrichtung wie vorstehend beschrieben und in den Ausführungsbeispielen konzeptionell noch weiter erläutert.

Ein Verfahren zum Verpacken von Artikeln wie bspw. Medizinalprodukten, insbesondere unter Verwendung einer hierin beschriebenen Übergabevorrichtung, umfasst besonders vorteilhaft die folgenden Schritte:
a) Bereitstellen eines flächigen Zuschnitts einer Verpackung.
   Verpackungsmaterialien werden typischerweise aus Lagerhaltungsgründen als flächiger Zuschnitt verwahrt und erst unmittelbar vor der Befüllung aufgerichtet.
b) Auffalten einer ersten Seitenwand des flächigen Zuschnitts derart, dass sie mit der Grundfläche der Verpackung einen Winkel α₁ von < 90° einschliesst, vorzugsweise von < 70°, besonders bevorzugt von < 50°.
   Das Aufstellen eines flächigen Zuschnitts soll einerseits möglichst schnell erfolgen, was grundsätzlich für weitestgehend gleichzeitige Vorgänge beim Aufstellen einer Verpackung spricht. Problematisch ist das Aufstellen aber einerseits insofern, als dass die üblicherweise verwendeten Materialien wie beispielsweise Karton nach dem Aufrichten beispielsweise einer Wand ein gewisses Rückstellmoment erzeugen. Es genügt also häufig nicht, eine Wand nur bis zur Senkrechten aufzustellen. Andererseits können aber insbesondere bei kleinen und geometrisch komplexen Verpackungen auch nicht gleichzeitig mehrere Wände derart aufgerichtet werden, dass sie mit der Grundfläche einen Winkel von zunächst kleiner 90° einschliessen. Es hat sich daher als Vorteil erwiesen, zunächst nur eine Wand bis zu einem solchen Winkel gewissermassen übermässig aufzurichten.
c) Entlasten oder Zurückfalten der ersten Seitenwand derart, dass sie mit der Grundfläche einen Winkel α₂ > α₁ einschliesst, vorzugsweise von > 75°, weiter bevorzugt von > 85°, besonders bevorzugt von > 95°.
   In diesem Schritt wird ein Zurückfalten entweder aktiv vorgenommen oder aufgrund des Rückstellmoments durch Entlastung erlaubt.
d) Auffalten einer zweiten Seitenwand des flächigen Zuschnitts derart, dass sie mit der Grundfläche der Verpackung einen Winkel β₁ von < 90° einschliesst, vorzugsweise von < 70°, besonders bevorzugt von < 50°.
   Der Vorgang beim Aufrichten der zweiten Seitenwand erfolgt im Wesentlichen analog zu Schritt b).
e) Entlasten oder Zurückfalten der zweiten Seitenwand derart, dass sie mit der Grundfläche einen Winkel β₂ > β₁ einschliesst, vorzugsweise von > 75°, weiter bevorzugt von > 85°, besonders bevorzugt von > 95°.
   In diesem Schritt wird auch für die zweite Seitenwand ein Zurückfalten entweder aktiv vorgenommen oder aufgrund des Rückstellmoments durch Entlastung erlaubt.
f) Einbringen des Artikels mit der Übergabevorrichtung in einen Bereich zwischen den Seitenwänden S₁ und S₂.

Das vorstehend beschriebene Verfahren zum Aufrichten flächiger Zuschnitte einer Verpackung eignet sich besonders, aber nicht nur in Kombination mit der erfindungsgemässen Übergabevorrichtung.

Das Aufrichten der Seitenwände kann in besonders vorteilhafter Art und Weise derart erfolgen, dass die Grundfläche der Verpackung in einer Aufrichtvorrichtung mittels Vakuum fixiert wird, wobei die Verpackung hierbei vorzugsweise in einer Rahmenanordnung ausgerichtet wird. Die Seitenwände können nun von unten beispielsweise mittels drehbaren Walzen angehoben werden, die vorzugsweise an einem drehbaren Bügel derart befestigt sind, dass die Walze die Seitenwand zunächst anhebt und weiter über die Grundfläche biegt. Bei der Rückbewegung des Bügels tritt aufgrund des Rückstellmoments des Verpackungsmaterials eine gewisse Rückbewegung der Seitenwand auf, was jedoch durch das vorherige übermässige Aufrichten weitestgehend berücksichtigt werden kann, wie vorstehend beschrieben.

Eine vorstehend beschriebene Aufrichtvorrichtung eignet sich besonders, aber nicht nur zur Verwendung in Kombination mit der erfindungsgemässen Übergabevorrichtung.

Die Erfindung wird nachfolgend in Ausführungsbeispielen anhand von Figuren näher erläutert, ohne dass die Erfindung auf diese konkreten Ausführungsbeispiele zu beschränken ist. Die Ausführungsbeispiele zeigen als Förderstrecken ausgebildete Bereitstellungsbereiche; selbstverständlich sind aber auch andere Bereitstellungsbereiche möglich, wie vorstehend erläutert.

Es zeigen:
- Figur 1: Perspektivische Frontansicht einer erfindungsgemässen Übergabevorrichtung;
- Figur 2: Perspektivische Rückansicht einer erfindungsgemässen Übergabevorrichtung;
- Figur 3: Weitere perspektivische Rückansicht einer erfindungsgemässen Übergabevorrichtung;
- Figur 4: Seitenansicht einer erfindungsgemässen Übergabeeinheit in verschiedenen Positionen;
- Figur 5: Weitere Seitenansicht einer erfindungsgemässen Übergabeeinheit in verschiedenen Positionen;
- Figur 6: Schematischer Ablauf des Aufrichtens einer Verpackung in einem Verfahren zum Verpacken von Artikeln;
- Figur 7: Vorrichtung zum Aufrichten von Verpackungen in einem Verfahren zum Verpacken von Artikeln.

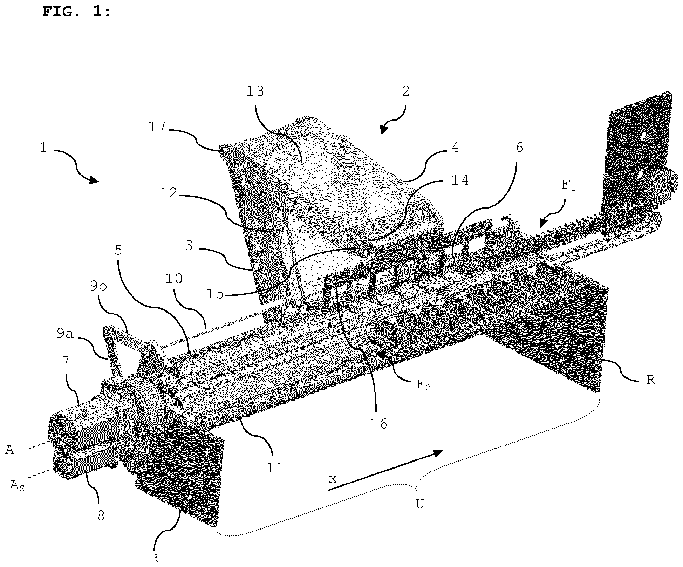

Figur 1 zeigt eine perspektivische Frontansicht einer erfindungsgemässen Übergabevorrichtung 1. Die erste Förderstrecke F₁ zur Zuführung von zu verpackenden Artikeln und die zweite Förderstrecke F₂ zur Zuführung von Verpackungsmaterial sind schematisch illustriert. Die beiden Förderstrecken verlaufen in dem Übergabeabschnitt U im Wesentlichen parallel. Die Übergabeeinheit 2 weist ein Basiselement 3 und einen Ausleger 4 auf. Das Basiselement 3 ist auf einem in dieser Darstellung leicht verdeckt noch ersichtlichen Hauptträger 5 geführt verfahrbar angeordnet. Die Antriebseinheit 6 für diese Bewegung des Basiselement 3 entlang der x-Achse ist ebenfalls leicht verdeckt in dieser Darstellung erkennbar. Für die Bewegung der Übergabeeinheit in den weiteren Raumrichtungen sind die in der Darstellung gut erkennbare zweite Antriebseinheit 7 und dritte Antriebseinheit 8 vorgesehen. Die zweite Antriebseinheit 7 verschwenkt den Hauptträger 5 mitsamt dem darauf geführten Basiselement 3 der Übergabeeinheit 2 und der an dem Hauptträger 5 befestigten ersten Antriebseinheit 6 um eine Achse A_{H}. Die dritte Antriebseinheit 8 ist mit einem Steuerträger 11 derart wirkverbunden, dass der Steuerträger 11 um eine Achse A_{S} drehbar ist. Die gesamte Übergabevorrichtung ist an einem Maschinenrahmen R befestigt. An diesem Maschinenrahmen R ist des Weiteren ein Drehgelenkmechanismus mit zwei Gliedern 9a und 9b vorgesehen. Dieser Drehgelenkmechanismus ist mit dem Glied 9a auf einer Seite drehbar an einer festen Position des Maschinenrahmens R gelagert. Auf der anderen Seite ist der Drehgelenkmechanismus mit dem Glied 9b mit einer mit dem Hauptträger 5 verbundenen Stellstange 10 derart verbunden, dass eine Drehung des Hauptträgers 5 um die Achse A_{H} entgegen dem Uhrzeigersinn in einer Drehung der Stellstange 10 im Uhrzeigersinn resultiert. An der Stellstange 10 ist ein Riemenübertrieb 12 vorgesehen, welcher auf der anderen Seite auf der Achse 13 gelagert ist, mit welcher der Ausleger 4 an dem Basiselement 3 befestigt ist. An der Achse 13 ist ein dort nicht dargestellter, weiterer Riemenübertrieb 14 vorgesehen, welcher nach vorne in den Ausleger 4 hineinreicht und dort schematisch angedeutet ist. Der Riemenübertrieb 14 ist vorne im Ausleger an einer Achse 15 vorgesehen, welche die Effektoreinheit 16 trägt. Über die vorstehend beschriebenen Riemenübertriebe (insbesondere der Auslegung der Riemenscheiben) und die Ausgestaltung des Drehgelenkmechanismus mit den Gliedern 9a und 9b kann mit fachüblichen Auslegungen eine gleichbleibende Ausrichtung der Effektoreinheit zur Senkrechten gewährleistet werden.

Im hinteren Bereich des Auslegers ist eine Achse 17 zu erkennen, an welcher eine in dieser Darstellung nicht erkennbare Steuer strebe 18 drehbar gelagert ist. Auf der gegenüberliegenden Seite ist diese Steuerstrebe 18 gelenkig an einem in dieser Ansicht ebenfalls nicht zu erkennenden Führungsprofil 19 auf dem Steuerträger 11 geführt verfahrbar befestigt.

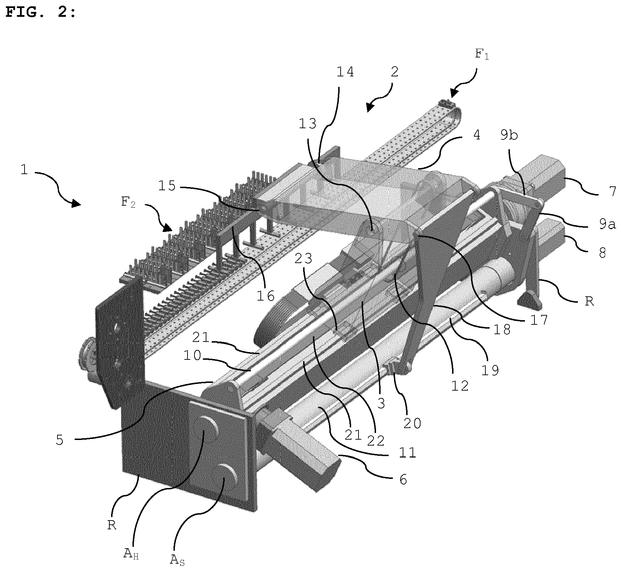

Figur 2 zeigt eine perspektivische Rückansicht einer erfindungsgemässen Übergabevorrichtung 1. Die erste Förderstrecke F₁ für die Artikel sowie die zweite Förderstrecke F₂ für die Verpackungen sind wiederum schematisch dargestellt. Der Hauptträger 5 ist auf beiden Seiten in einem Maschinenrahmen R drehbar gelagert. Der Hauptträger 5 ist dabei um die Achse A_{H} drehbar. Diese Drehung wird über die zweite Antriebseinheit 7 vermittelt. Der Hauptträger ist mit Führungsprofilen 21 versehen, auf welchen das Basiselement 3 der Übergabeeinheit 2 entlang der x-Achse verfahrbar angeordnet ist. Hierfür sind an dem Basiselement 3 entsprechende Gleiter 23 vorgesehen, welche mit dem jeweiligen Führungsprofil 21 wechselwirken. Die Bewegung der Übergabeeinheit 2 entlang der x-Achse wird über die erste Antriebseinheit 6 vermittelt. Hierfür ist ein Riemenübertrieb 22 vorgesehen, welcher mit dem Basiselement 3 der Übergabeeinheit 2 verbunden ist. Ebenfalls in dieser Ansicht gut erkennbar ist der Steuerträger 11, welcher in diesem Ausführungsbeispiel zylindrisch ausgebildet ist. Der Steuerträger ist um eine Achse A_{S} drehbar, wobei diese Drehung über die dritte Antriebseinheit 8 vermittelt wird. Auf diesem Steuerträger 11 ist ein Führungsprofil 19 angeordnet, auf welchem ein Gleiter 20 geführt ist. An diesem Gleiter 20 ist die Steuerstrebe 18 gelenkig befestigt; an ihrem gegenüberliegenden Endbereich ist die Steuerstrebe 18 an dem Ausleger 4 des Basiselements 3 ebenfalls gelenkig mit einer Achse 17 verbunden. Das Basiselement 3 ist mit dem Ausleger 4 an einer Achse 13 drehbar verbunden. Es ist somit ersichtlich, dass mittels Drehungen des Steuerträgers 11 um die Achse A_{S} und/oder des Hauptträgers 5 um die Achse A_{H} die Position des Auslegers 4 sehr flexibel beeinflussbar ist, ohne dass Antriebseinheiten parallel zur x-Achse bewegt werden müssen. Das ermöglicht auf besonders einfache Art und Weise erhöhte Arbeitsgeschwindigkeiten, ohne dass Einbussen bei der Beweglichkeit der Übergabevorrichtung hingenommen werden müssten. Lediglich die erste Antriebseinheit 6 wird um die Achse A_{H} verschwenkt, was jedoch keine grossen Wege bedeutet und somit die mögliche Arbeitsgeschwindigkeit nicht Wesentlich beeinflusst.

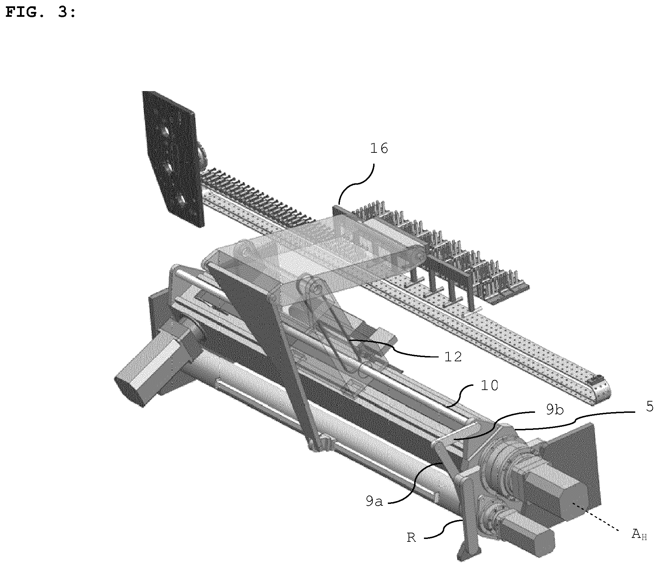

Ebenfalls ersichtlich in Figur 2 ist wiederum die Stellstange 10, welche an dem Hauptträger 5 befestigt und mit diesem verschwenkbar ist. Diese Stellstange 10 reicht durch das Basiselement 3 hindurch. An der Stellstange 10 ist ein Riemenübertrieb 12 schematisch angedeutet, welcher an seinem gegenüberliegenden Ende mit der Achse 13 wechselwirkt. An dieser Achse ist ein (im Inneren des Auslegers 4 nicht explizit gezeichneter) zweiter Riemenübertrieb 14 angeordnet, welcher an seinem gegenüberliegenden Ende mit der Achse 15 wechselwirkt, an welcher die Effektoreinheit 16 befestigt ist. Es ist somit ersichtlich, dass mithilfe der Riemenübertriebe 12 und 14 auf besonders einfache Art und Weise eine unabhängig von der konkreten Position der Übergabeeinheit möglichst gleichbleibende, insbesondere vertikale Ausrichtung der Effektoreinheit 16 gewährleistet werden kann. Auch der Drehgelenkmechanismus mit den Gliedern 9a und 9b ist in Figur 2 wieder ersichtlich; er wird im Rahmen der Beschreibung von Figur 3 noch näher erläutert.

In Figur 3 ist eine weitere perspektivische Rückansicht einer erfindungsgemässen Übergabevorrichtung gezeigt. Im Gegensatz zu der Darstellung aus Figur 2 ist hier der Seitenbereich mit der zweiten Antriebseinheit 7 und der dritten Antriebseinheit 8 im Vordergrund dargestellt. Im Rahmen dieser Darstellung wird nachfolgend der Drehgelenkmechanismus mit den Gliedern 9a und 9b näher erläutert. Das Glied 9a ist drehbar an dem Maschinenrahmen R gelagert. Das Glied 9b ist mit dem Hauptträger 5 derart wirkverbunden, dass eine Bewegung des Gliedes 9b in einer Drehung der Stellstange 10 resultiert. Das kann in besonders einfacher Art und Weise dadurch bewirkt werden, dass die Stellstange 10 durch eine Aufnahme im Hauptträger 5 hindurch geführt und fest mit dem Glied 9b verbunden ist. Es ist somit ersichtlich, dass eine Drehung des Hauptträgers 5 um die Achse A_{H} im Uhrzeigersinn eine gegensinnige Drehung der Stellstange 10 bewirkt. Das Ausmass dieser Drehung kann mit fachüblichen Routinemassnahmen über die konkrete Gestaltung des Drehgelenks vorgenommen werden. An der Stellstange 10 ist der Riemenübertrieb 12 angeordnet, mit welchem die Position der Effektoreinheit 16 beeinflusst werden kann, wie vorstehend beschrieben. Es ist ersichtlich, dass auf diese konstruktiv besonders einfache Art und Weise eine präzise Ausrichtung gewährleistet werden kann, ohne dass schwere Teile über weite Strecken bewegt werden müssten, was der möglichen Arbeitsgeschwindigkeit sehr zuträglich ist.

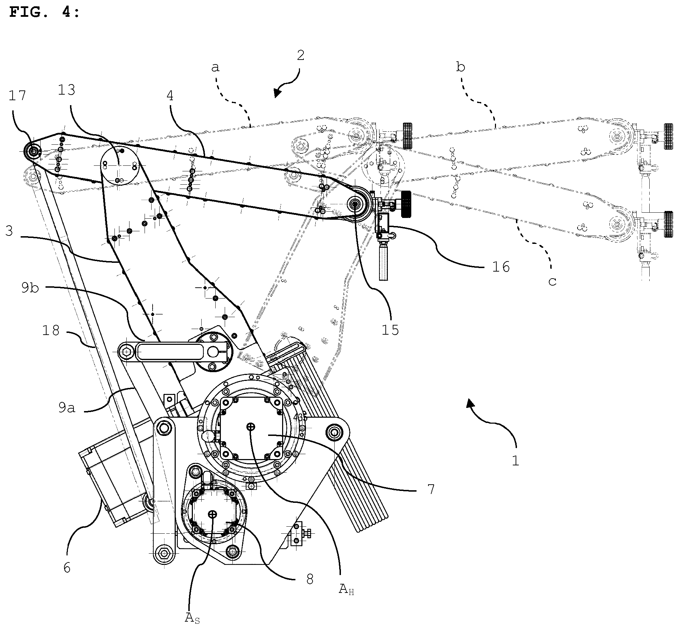

In Figur 4 ist eine Seitenansicht einer erfindungsgemässen Übergabevorrichtung 1 gezeigt. Hierbei befinden sich die zweite Antriebseinheit 7 und die dritte Antriebseinheit 8 im Vordergrund. Senkrecht zur Papierebene durch die Antriebseinheiten hindurch verlaufen die Achsen A_{H} und A_{S}. Im Hintergrund ersichtlich ist die erste Antriebseinheit 6, welche an dem gegenüberliegenden Endbereich der Übergabevorrichtung 1 am Hauptträger 5 angeordnet ist, wie aus den vorherigen Figuren ersichtlich ist. Der Drehgelenkmechanismus mit den Gliedern 9a und 9b ist im Vordergrund erkennbar. Das Glied 9a ist am Maschinenrahmen R drehbar gelagert, und das Glied 9b fest mit der in dieser Darstellung nicht erkennbaren Stellstange 10 verbunden. Die zweite Antriebseinheit 8 bewirkt eine Drehung des Stellträgers 11, der in dieser Darstellung nicht ersichtlich ist. An dem Stellträger 11 ist die Stellstrebe 18 gleitend geführt. Eine Drehung des Stellträgers 11 bewirkt eine entsprechende Bewegung der Stellstrebe 18. Das Basiselement 3 der Übergabeeinheit 2 ist an einer Achse 13 mit dem Ausleger 4 verbunden. Ebenfalls an dem Ausleger an einer Achse 17 befestigt ist die Steuerstrebe 18. Im vorderen Bereich des Auslegers 4 ist die Effektoreinheit 16 an einer Achse 15 angeordnet. Die vorstehend beschriebenen Riemenübertriebe 12 und 14 sind in dieser Darstellung nicht ersichtlich. In der Figur 4 sind neben der in durchgezogenen Linien gezeigten Position noch weitere Positionen a, b und c der Übergabeeinheit in strichpunktierten Linien dargestellt, sodass ein typisches Bewegungsmuster der Übergabeeinheit 2 leicht verständlich wird.

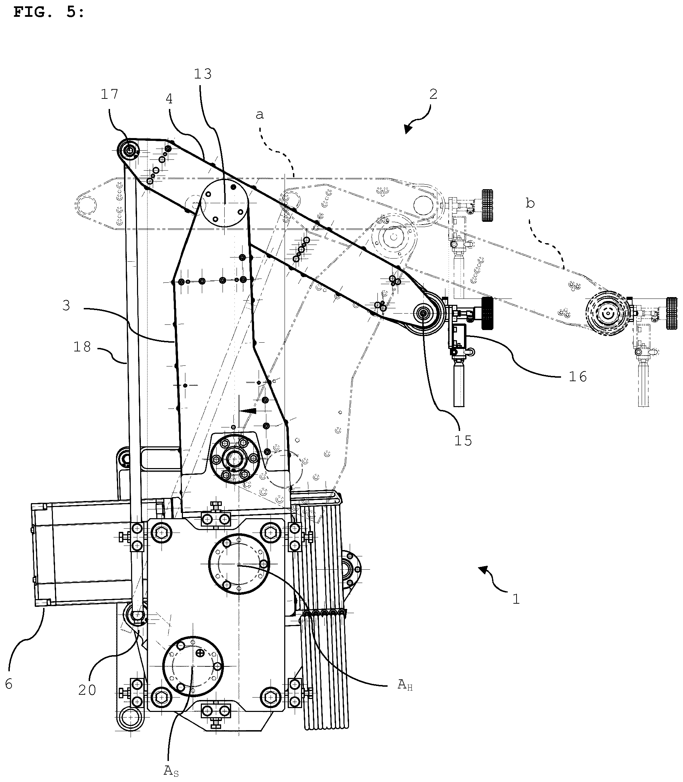

In Figur 5 ist eine weitere Seitenansicht einer erfindungsgemässen Übergabevorrichtung 1 gezeigt, und zwar von der zu der Ansicht gemäss Figur 4 gegenüberliegenden Seite. Im Vordergrund befinden sich die Lagerungen für den Hauptträger 5 mit der Achse A_{H}, und die Lagerung für den Steuerträger 11 mit der Achse A_{S}. Die Steuerstrebe 18 ist gelenkig an einem Gleiter 20 befestigt, welcher auf dem Steuerträger 11 geführt ist. Die Steuerstrebe 18 ist in ihrem oberen Endbereich mit der Achse 17 an dem Ausleger 4 befestigt. Der Ausleger 4 ist des Weiteren an der Achse 13 mit dem Basiselement 3 der Übergabeeinheit 2 verbunden. Die Effektoreinheit 16 ist im vorderen Bereich des Auslegers 4 an einer Achse 15 angeordnet. Die vorstehend beschriebenen Riemenübertriebe zur Ausrichtung der Effektoreinheit 16 sind in dieser Figur nicht im Detail ersichtlich. In der Figur 5 sind wiederum neben der in durchgezogenen Linien gezeigten Position noch weitere Positionen a und b der Übergabeeinheit 2 in strichpunktierten Linien dargestellt, sodass ein typisches Bewegungsmuster der Übergabeeinheit 2 leicht verständlich wird.

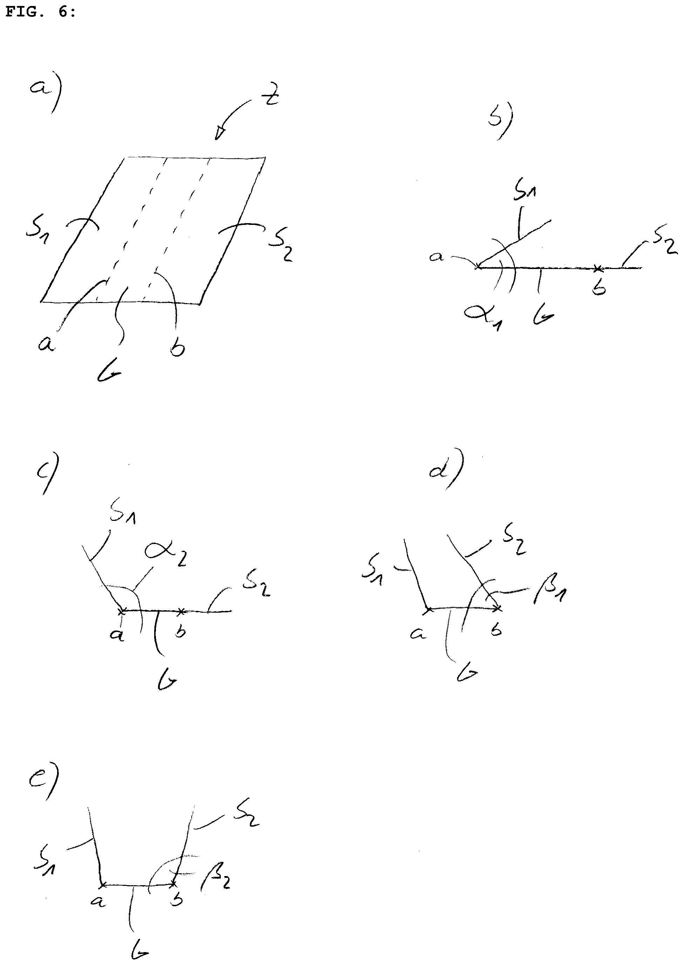

In Figur 6 ist schematisch ein Verfahren zum Verpacken von Artikeln illustriert, insbesondere der Vorgang des Auffaltens einer Verpackung wie bspw. eines flächigen Zuschnitts Z oder einer vorgeklebten, zusammengelegten Verpackung oder eines Verpackungselements (bspw. eines Trays). Der flächige Zuschnitt Z umfasst eine Grundfläche G sowie eine Seitenwand S1 und eine Seitenwand S2. Die Grundfläche G ist von der Seitenwand S₁ durch eine Schwächungslinie a und von der Seitenwand S₂ durch eine Schwächung die b getrennt. In Figur 6a) ist der flächige Zuschnitt in einer perspektivischen Draufsicht gezeigt. In Figur 6b) ist der flächige Zuschnitt in einer Seitenansicht in Richtung der Achsen der Schwächungslinien a und b gezeigt. In einem ersten Verfahrensschritt wird die Seitenwand S₁ aufgerichtet, und zwar bis dass sie einen Winkel α₁ von kleiner 90° mit der Grundfläche G einschliesst. In einem nächsten Verfahrensschritt, der in Figur 6c) dargestellt ist, wird die Seitenwand wieder etwas zurück bewegt, bis dass sie einen Winkel α₂ > α₁ mit der Grundfläche G einschliesst. Das kann beispielsweise bei Entlastung durch das dem Verpackungsmaterial eigene Rückstellmoment erfolgen, oder aber auch durch aktive Rückstellung. In dem in Figur 6d) dargestellten Verfahrensschritt wird nun die Seitenwand S₂ entlang der Schwächung b aufgerichtet, analog zu der Seitenwand S₁. Wiederum wird die Seitenwand S₂ zunächst derart aufgerichtet, dass sie einen Winkel β₁ mit der Grundfläche G von kleiner 90° einschliesst. Anschliessend wird in dem in Figur 6e) dargestellten Verfahrensschritt auch eine Rückwärtsbewegung der Seitenwand S₂ erlaubt, sodass sie schliesslich einen Winkel β₂ > β₁ mit der Grundfläche G einschliesst. Gegebenenfalls kann es die Verpackungsgeometrie erfordern, dass die Seitenwand S₁ zunächst in Schritt 6c) wieder etwas weiter zurück bewegt werden muss als in der finalen Verpackung gewünscht, um die die Seitenwand S2 in Schritt 6d) wie beschrieben aufzurichten. Dann wird nach dem Schritt 6e) die Seitenwand S₁ nochmals in ihre Endposition aufgerichtet.

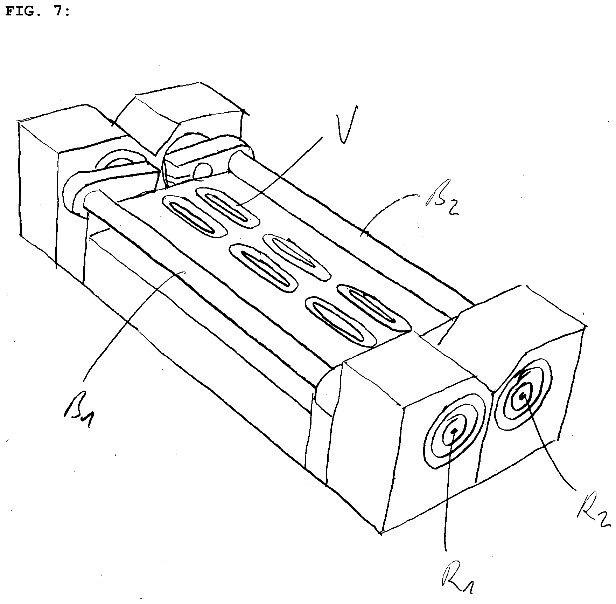

In Figur 7 ist eine Vorrichtung gezeigt, mit welcher das in Figur 6 illustrierte Verfahren besonders einfach und zuverlässig durchführbar ist. In einem zentralen Bereich der Vorrichtung sind Vakuumelemente V gezeigt, mit denen ein flächiger Zuschnitt eines Verpackungselements oben auf der Vorrichtung temporär gehalten werden kann. Des Weiteren umfasst die Vorrichtung zwei unabhängig voneinander bewegbare Bügel B₁ und B₂. Diese Bügel sind um die Achsen R₁ bzw. R₂ drehbar. Bei bestimmungsgemässem Betrieb der gezeigten Vorrichtung wird die Grundfläche einer Verpackung von den Vakuumelementen V festgehalten. Die Seitenwände (S₁ bzw. S₂ in Figur 6) werden oberhalb der Bügel B₁ bzw. B₂ angeordnet. Durch Drehung der Bügel B₁ bzw. B₂ werden nun die Seitenwände S₁ bzw. S₂ in der in Figur 6 illustrierten Art und Weise aufgestellt.

## Patentansprüche

1. Übergabevorrichtung (1) für eine Verpackungsmaschine, mit
- einem ersten Bereitstellungsbereich, insbesondere einer Förderstrecke (F₁), zur Bereitstellung von zu verpackenden oder zu übersetzenden Artikeln;
- einem zweiten Bereitstellungsbereich, insbesondere einer Förderstrecke (F₂), insbesondere zur Bereitstellung von Verpackungsmaterial;
wobei
- der erste Bereitstellungsbereich, insbesondere die erste Förderstrecke (F₁), und der zweite Bereitstellungsbereich, insbesondere die zweite Förderstrecke (F₂), in einem Übergabeabschnitt (U) nebeneinander angeordnet sind und insbesondere parallel verlaufen;
- wobei die Übergabevorrichtung (1) eine Übergabeeinheit (2) aufweist, welche in dem Übergabeabschnitt (U) verfahrbar angeordnet ist;
- wobei die Übergabeeinheit (2) derart ausgebildet ist, dass ein Transfer von Artikeln von dem ersten Bereitstellungsbereich, insbesondere der ersten Förderstrecke (F₁), in den zweiten Bereitstellungsbereich, insbesondere auf die zweite Förderstrecke (F₂), ermöglicht ist;
- wobei eine erste Antriebseinheit (6) für das Verfahren der Übergabeeinheit (2) vorgesehen ist;
- wobei eine zweite Antriebseinheit (7), vorzugsweise eine zweite Antriebseinheit (7) und eine dritte Antriebseinheit (8), für Bewegungen der Übergabeeinheit (2) beim Transfer von Artikeln von dem ersten Bereitstellungsbereich, insbesondere der ersten Förderstrecke (F₁), in den zweiten Bereitstellungsbereich, insbesondere auf die zweiten Förderstrecke (F₂), vorgesehen ist;
wobei die erste Antriebseinheit (6) und die zweite Antriebseinheit (7), vorzugsweise die erste Antriebseinheit (6), die zweite Antriebseinheit (7) und die dritte Antriebseinheit (8), nicht gemeinsam mit der Übergabeeinheit (2) verfahrbar sind, **dadurch gekennzeichnet, dass** die Übergabeeinheit (2) ein Basiselement (3), einen Ausleger (4) und eine Steuerstrebe (18) umfasst, welche an dem Ausleger (4) an der von dem ersten Bereitstellungsbereich und/oder dem zweiten Bereitstellungsbereich abgewandten Seite insbesondere drehbar angelenkt ist und wobei das Basiselement (3) auf einem Hauptträger (5) geführt ist, welcher sich in seiner Hauptdehnungsrichtung entlang dem ersten Bereitstellungsbereich und/oder dem zweiten Bereitstellungsbereich erstreckt, insbesondere parallel zur ersten Förderstrecke (F1) und/oder zur zweiten Förderstrecke (F2) und wobei die Steuerstrebe (18)auf einem Steuerträger (11) insbesondere gelenkig geführt ist, wobei sich der Steuerträger (11) in seiner Hauptausdehnungsrichtung im Wesentlichen parallel zur Hauptausdehnungsrichtung des Hauptträgers (5) erstreckt.

2. Übergabevorrichtung (1) gemäss Anspruch 1, **dadurch gekennzeichnet, dass** der Ausleger (4) an dem Basiselement (3) insbesondere drehbar angelenkt ist.

3. Übergabevorrichtung (1) gemäss einem der Ansprüche 1 oder 2, **dadurch gekennzeichnet, dass** die erste Antriebseinheit (6) an dem Hauptträger (5) angeordnet ist.

4. Übergabevorrichtung (1) gemäss Anspruch 3, **dadurch gekennzeichnet, dass** die erste Antriebseinheit (6) über einen Riemen (22), insbesondere einen Zahnriemen oder eine Kette mit dem Basiselement (3) wirkverbunden ist.

5. Übergabevorrichtung (1) gemäss einem der Ansprüche 1 bis 4, **dadurch gekennzeichnet, dass** die zweite Antriebseinheit (7) derart mit dem Hauptträger (5) wirkverbunden ist, dass der Hauptträger(5) um eine zu seiner Hauptausdehnungsrichtung im Wesentlichen parallelen Achse A_{H} drehbar ist.

6. Übergabevorrichtung (1) gemäss Anspruch 1, **dadurch gekennzeichnet, dass** der Steuerträger (11) mittels der dritten Antriebseinheit (8) um eine zu seiner Hauptausdehnungsrichtung im Wesentlichen parallelen Achse A_{S} drehbar ist.

7. Verpackungsmaschine mit einer Übergabevorrichtung (1) gemäss einem der vorstehenden Ansprüche.

8. Verwendung einer Übergabevorrichtung (1) gemäss einem der Ansprüche 1 bis 6 zum Verpacken von Artikeln, insbesondere Medizinalprodukten oder Verpackungselementen.

9. Verfahren zum Verpacken von Artikeln, insbesondere Medizinalprodukten oder Verpackungselementen, mittels einer Übergabevorrichtung (1) gemäss einem der Ansprüche 1 bis 6 in einer Verpackungsmaschine.

## Claims

1. Transfer device (1) for a packaging machine,
- a first supply area, in particular a conveyor line (F1), for the supply of articles to be packed or translated;
- a second supply area, in particular a conveyor line (F2), in particular for supplying packaging material;
wherein
- the first staging area, in particular the first conveyor section (F1),and the second staging area, in particular the second conveyor section (F2), are arranged side by side in a transfer section (U) and, in particular, run parallel;
- wherein the transfer device (1) has a transfer unit (2) which is movably arranged in the transfer section (U);
- wherein the transfer unit (2) is designed in such a way that a transfer of articles from the first readiness area, in particular the first conveyor section (F1), into the second readiness area, in particular onto the second conveyor section (F2), is made possible;
- wherein a first drive unit (6) is provided for moving the transfer unit (2);
- wherein a second drive unit (7), preferably a second drive unit (7) and a third drive unit (8), is provided for movements of the transfer unit (2) during the transfer of articles from the first preparation area, in particular the first conveyor line (F1), into the second preparation area, in particular onto the second conveyor line (F2); wherein the first drive unit (6) and the second drive unit (7), preferably the first drive unit (6), the second drive unit (7) and the third drive unit (8), cannot be moved together with the transfer unit (2),
**characterized in that** the transfer unit (2) comprises a base element (3), an extension arm (4) and a control strut (18) which is articulated, in particular rotatably, to the extension arm (4) on the side facing away from the first staging area and/or the second staging area, and
wherein the base element (3) is guided on a main carrier (5), which extends in its main direction of extension along the first supply area and/or the second supply area, in particular parallel to the first conveyor line (F1) and/or to the second conveyor line (F2), and
wherein the control strut (18) is guided, in particular in an articulated manner, on a control carrier (11), the control carrier (11) extending in its main direction of extension substantially parallel to the main direction of extension of the main carrier (5).

2. Transfer device (1) according to claim 1, **characterized in that** the boom (4) is hinged to the base element (3), in particular rotatably.

3. Transfer device (1) according to one of claims 1 or 2, **characterized in that** the first drive unit (6) is arranged on the main beam (5).

4. Transfer device (1) according to claim 3, **characterized in that** the first drive unit (6) is operatively connected to the base element (3) via a belt (22), in particular a toothed belt or a chain.

5. Transfer device (1) according to one of claims 1 to 4, **characterized in that** the second drive unit (7) is operatively connected to the main beam (5) in such a way that the main beam (5) is rotatable about an axis AH substantially parallel to its main direction of extension.

6. Transfer device (1) according to claim 1, **characterized in that** the control carrier (11) is rotatable by means of the third drive unit (8) about an axis AS substantially parallel to its main direction of extension.

7. Packaging machine with a transfer device (1) according to one of the above claims.

8. Use of a transfer device (1) according to one of the claims 1 to 6 for packaging articles, in particular medical products or packaging elements.

9. Method for packaging articles, in particular medical products or packaging elements, by means of a transfer device (1) according to one of the claims 1 to 6 in a packaging machine.

## Revendications

1. Dispositif de transfert (1) pour une machine d'emballage, avec
- une première zone de mise à disposition, notamment une ligne de convoyage (F1), pour la mise à disposition des articles à emballer ou à traduire ;
- une deuxième zone d'approvisionnement, notamment une section de convoyage (F2), en particulier pour l'approvisionnement en matériel d'emballage;
où
- la première zone de transit, en particulier la première section de transport (F1), et la deuxième zone de transit, en particulier la deuxième section de transport (F2), sont disposées côte à côte dans une section de transfert (U) et, en particulier, sont parallèles;
- dans lequel le dispositif de transfert (1) comporte une unité de transfert (2) qui est disposée dans la section de transfert (U) de manière à être mobile;
- l'unité de transfert (2) étant conçue de telle sorte qu'un transfert d'articles de la première zone de préparation, en particulier de la première section de convoyeur (F1), à la deuxième zone de préparation, en particulier à la deuxième section de convoyeur (F2), est possible;
- dans laquelle une première unité d'entraînement (6) est prévue pour déplacer l'unité de transfert (2);
- dans lequel une deuxième unité d'entraînement (7), de préférence une deuxième unité d'entraînement (7) et une troisième unité d'entraînement (8), est prévue pour les mouvements de l'unité de transfert (2) pendant le transfert des articles de la première zone de préparation, en particulier de la première section de convoyeur (F1), dans la deuxième zone de préparation, en particulier sur la deuxième section de convoyeur (F2);
dans laquelle la première unité d'entraînement (6) et la deuxième unité d'entraînement (7), de préférence la première unité d'entraînement (6), la deuxième unité d'entraînement (7) et la troisième unité d'entraînement (8), ne peuvent pas être déplacées avec l'unité de transfert (2),
**caractérisé en ce que** l'unité de transfert (2) comprend un élément de base (3), un bras de rallonge (4) et une entretoise de commande (18) qui est articulée, en particulier de manière rotative, sur le bras de rallonge (4) sur le côté opposé à la première zone de transit et/ou à la deuxième zone de transit, et
dans lequel l'élément de base (3) est guidé sur un support principal (5) qui s'étend dans sa direction d'extension principale le long de la première zone d'approvisionnement et/ou de la deuxième zone d'approvisionnement, en particulier parallèlement à la première section de transport (F1) et/ou à la deuxième section de transport (F2), et
la jambe de force (18) étant guidée, notamment de manière articulée, sur un support de commande (11), le support de commande (11) s'étendant dans sa direction d'extension principale sensiblement parallèlement à la direction d'extension principale du support principal (5).

2. Dispositif de transfert (1) selon la revendication 1, **caractérisé en ce que** la flèche (4) est articulée sur l'élément de base (3), en particulier de manière rotative.

3. Dispositif de transfert (1) selon l'une des revendications 1 ou 2, **caractérisé en ce que** la première unité d'entraînement (6) est disposée sur le faisceau principal (5).

4. Dispositif de transfert (1) selon la revendication 3, **caractérisé en ce que** la première unité d'entra nement (6) est reliée de manière active à l'élément de base (3) par l'intermédiaire d'une courroie (22), en particulier une courroie dentée ou une cha ne.

5. Dispositif de transfert (1) selon l'une des revendications 1 à 4, **caractérisé en ce que** la deuxième unité d'entra nement (7) est reliée de manière opérationnelle à la poutre principale (5) de telle sorte que la poutre principale (5) peut tourner autour d'un axe AH sensiblement parallèle à sa direction d'extension principale.

6. Dispositif de transfert (1) selon la revendication 1, **caractérisé en ce que** le support de commande (11) peut tourner au moyen de la troisième unité d'entra nement (8) autour d'un axe AS sensiblement parallèle à sa direction d'extension principale.

7. Machine d'emballage avec un dispositif de transfert (1) selon l'une des revendications ci-dessus.

8. Utilisation d'un dispositif de transfert (1) selon l'une des revendications 1 à 6 pour l'emballage d'articles, en particulier de produits médicaux ou d'éléments d'emballage.

9. Méthode d'emballage d'articles, en particulier de produits médicaux ou d'éléments d'emballage, au moyen d'un dispositif de transfert (1) selon l'une des revendications 1 à 6 dans une machine d'emballage.
